Europäisches Patentamt

European Patent Office

Office européen des brevets

(11) Veröffentlichungsnummer: **0 072 558**
**A2**

(12) **EUROPÄISCHE PATENTANMELDUNG**

(21) Anmeldenummer: **82107411.9**

(22) Anmeldetag: **16.08.82**

(51) Int. Cl.³: **B 01 L 3/02**

(30) Priorität: **19.08.81 DE 3132702**

(43) Veröffentlichungstag der Anmeldung:
**23.02.83** Patentblatt **83/8**

(84) Benannte Vertragsstaaten:
**AT BE CH DE FR GB IT LI LU NL SE**

(71) Anmelder: **Tecan AG**
**Landhaus Holgass**
**CH-8634 Hombrechtikon(CH)**

(72) Erfinder: **Abplanalp, Heinz**
**Landhaus Holgass**
**CH-8634 Hombrechtikon(CH)**

(74) Vertreter: **Blum, Rudolf E. et al,**
**c/o E. Blum & Co Patentanwälte Vorderberg 11**
**CH-8044 Zürich(CH)**

(54) **Pipettierverfahren und -automat.**

(57) Bei dem Verfahren zum Pipettieren mittels eines Proben-verteilautomaten wird zwischen der elektrisch leitenden Spitze (10) zur Probenentnahme und dem Probentisch (1) ein elektrisches Feld erzeugt, wobei die beim Auftreffen der Spitze (10) auf den Flüssigkeitsspiegel auftretende Aende-rung im elektrischen Feld, als Auslösesignal für eine in einem Computer vorprogrammierten Eintauchtiefe und Flüssig-keitsmenge verwendet wird.

EP 0 072 558 A2

0072558

- 1 -

Pipettierverfahren und -automat

-----------------------------------------

Die Erfindung bezieht sich auf ein Verfahren zum Pipettieren gemäss dem Oberbegriff des Patentanspruches 1 und auf einen Automaten zur Durchführung des Verfahrens.

Bei den bekannten Pipettierverfahren wird zur Vermeidung der Kontamination ein Reinigungsvorgang vorgesehen, um die Spitze und die Elektrode zur Abtastung des Flüssigkeitsniveaus zu reinigen.

Ziel der Erfindung ist es ein Verfahren zum Pipettieren mittels eines Pipettierautomaten zu schaffen, welches durch Wegfallen des Reinigungsvorganges vereinfacht wird.

Dieses Ziel wird erfindungsgemäss mit den im Patentanspruch 1 genannten Merkmalen erreicht.

Bei einer vorteilhaften Weiterausbildung des erfindungsgemässen Verfahrens wird zwischen der Spitze und dem Pirmärrack ein elektrisches Feld erzeugt und die durch das Auftreffen der Spitze auf den Flüssigkeitsspiegel verursachte Aenderung im elektrischen Feld als Auslösesignal für den Eintauchvorgang der Spitze verwendet.

Ein Automat zur Durchführung des Verfahrens ist erfindungsgemäss durch die im Patentanspruch 4 genannten Merkmale gekennzeichnet.

Es ist von Vorteil, wenn die Spitze und der Probentisch aus elektrischleitendem Material be-

Hb/dp
9.8.1982

EU 1124

stehen und mit der Steuereinrichtung elektrisch verbunden sind, um das elektrische Feld zu erzeugen. Da die Spitze als Abtastorgan dient, kann eine separate Abtastelektrode und somit auch der Reinigungsvorgang entfallen.

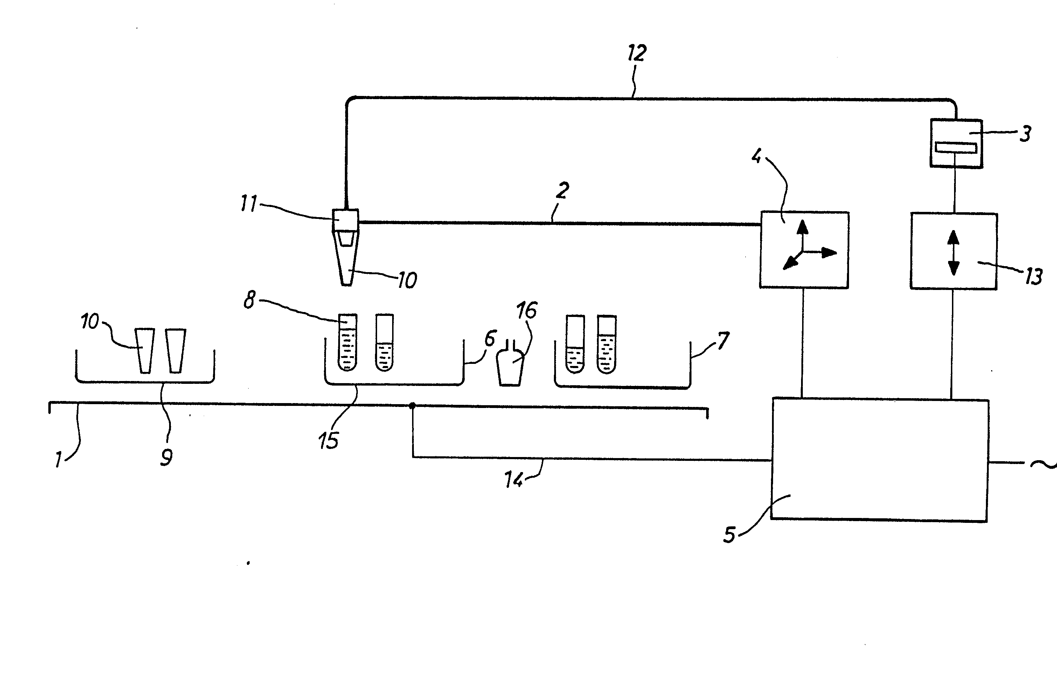

Die Erfindung wird anhand der beiliegenden Zeichnung erläutert.

In der Figur ist ein Ausführungsbeispiel eines Pipettierautomaten dargestellt, der im wesentlichen einen Probentisch 1, einen Probenverteilarm 2, eine Dosierspritze 3, eine Verstelleinrichtung 4 für den Probenverteilarm und eine elektronische Steuereinrichtung 5 aufweist.

Auf dem Probentisch 1 sind ein Primärrack 6 und ein Sekundärrack 7 für Probengläser 8 und ein Lagerbehälter oder Sortierer 9 für Spitzen 10 und Platz für zu dosierende Reagentien 17 vorgesehen.

Am Probenverteilarm 2 sind Mittel 11 zum Aufnehmen der Spitze 10 vorgesehen, wobei die Spitze 10 dann über ein Verbindungselement 12 mit der Dosierspritze 3 verbunden sind.

Die Dosierspritze 3 ist mit einer Betätigungseinrichtung 13 versehen, die durch die Steuereinrichtung 5 gesteuert wird.

Die Spitze 10 besteht aus einem Material, das schwach elektrisch leitend ist. Die Spitze 10 ist über den Verteilarm 2 mit der Steuereinrichtung 5 elektrisch verbunden.

Die Bodenplatte, die aus elektrisch leitendem Material besteht, ist über eine Leitung 14 mit der Steuereinrichtung 5 verbunden ist.

Nachfolgend wird das Verfahren anhand der vorstehend beschriebenen Vorrichtung erläutert.

In den in der Steuereinrichtung 5 vorgesehenen Computer wird die zu pipettierenden Mengen eingegeben, wonach der Pipettiervorgang automatisch abläuft.

Der Probenverteilarm 2 nimmt aus dem Lagerbehälter oder dem Sortierer 9 eine Spitze 10 auf und bringt die

0072558

Spitze 10 über ein Probenglas 8 im Primärrack 6 in Stellung. In dieser Stellung wird ein elektrisches Feld zwischen dem Probentisch und der Spitze erzeugt, wobei das Flüssigkeitsniveau im Probenglas 8 eine veränderliche Störgrösse bildet, die vor dem Absenken der Spitze 10 mittels eines adaptiven Messverfahrens auskompensiert wird.

Danach wird die Spitze 10 abgesenkt. Beim Auftreffen der Spitze 10 auf den Flüssigkeitsspiegel im Probenglas 8 tritt eine sprunghafte Aenderung im elektrischen Feld auf. Mit dieser Aenderung wird der durch den Computer in der Steuereinrichtung 5 bestimmte Eintauchvorgang ausgelöst, wobei die Eintauchtiefe durch den Computer vorgegeben wird.

Nachdem die in den Computer eingegebene Flüssigkeitsmenge durch Betätigung der Dosierspritze 3 in die Spitze 10 eingesaugt ist, wird die Spitze 10 durch den Probenverteilarm 2 angehoben und über einem Probenglas im Sekundärrack 7 in Stellung gebracht.

Die Flüssigkeitsmenge wird dann aus der Spitze 10 in das Probenglas mit der Dosierspritze 3 ausgestossen. Anschliessend wird die Spitze 10 zu einem Abfallbehälter transportiert, wo die Spitze 10 dann vom Probenverteilarm 2 abgestossen wird. Damit ist die Vorrichtung für einen neuen Pipettiervorgang bereit.

Patentansprüche
----------------------------

1. Verfahren zum Pipettieren mittels eines Probenverteilautomaten, aufweisend einen Probentisch mit einem Primärrack und einem Sekundärrack für Probengläser, einen Probenverteilarm, eine Verstelleinrichtung für den Probenverteilarm, eine Dosierspritze und eine elektronische Steuereinrichtung, dadurch gekennzeichnet, dass der Probenverteilarm eine Spitze aus einer Einrichtung aufnimmt und die Spitze über ein im Primärrack angeordnetes Probenglas in Stellung bringt, dass das Flüssigkeitsniveau im Probenglas mit der Spitze abgetastet wird, dass nach Massgabe eines in der Steuereinrichtung vorgesehenen Computers die Spitze mittels des Probenverteilarmes in eine vorbestimmte Tiefe in das Probenglas eingetaucht und mittels der Dosierspritze eine vorbestimmte Flüssigkeitsmenge in die Spitze eingesaugt wird, dass der Probenverteilarm die Spitze über ein im Sekundärrack angeordnetes Probenglas in Stellung bringt, dass die Flüssigkeitsmenge durch die Dosierspritze in das Probenglas eingebracht wird und dass der Probenverteilarm die Spitze dann in einen Abfallbehälter abstösst.

2. Verfahren nach Anspruch 1, dadurch gekennzeichnet, dass zur Abtastung des Flüssigkeitsniveaus im Probenglas zwischen Primärrack und Spitze ein elektrisches Feld erzeugt wird, wobei die beim Auftreffen der Spitze auf den Flüssigkeitsspiegel auftretende sprunghafte Aenderung im elektrisches Feld, als Auslösesignal für das Eintauchen der Spitze in die Flüssigkeit verwendet wird.

3. Verfahren nach Anspruch 1, dadurch gekennzeichnet, dass die Spitze einem Lagerbehälter oder Sortierer entnommen wird.

4. Automat zur Durchführung des Verfahren nach Anspruch 1, mit einem Probentisch, der ein Primärrack und ein Sekundärrack für Probengläser aufweist, mit einem Probenverteilarm, mit einer Verstelleinrichtung für den Probenverteilarm, mit einer Dosierspritze und mit einer elektronischen Steuervorrichtung, dadurch gekennzeichnet, dass eine Spitze (10) zur Ueberführung der Flüssigkeitsmenge vom Probenglas (8) im Primärrack (6) zum Probenglas im Sekundärrack (7) vorgesehen ist und dass der Probenverteilarm (2) mit Mitteln (11) zum Aufnehmen der Spitze (10) aus einer Einrichtung und zum Abstossen der Spitze (10) in einen Abfallbehälter versehen ist.

5. Automat nach Anspruch 4, dadurch gekennzeichnet, dass die Spitze (10) aus elektrisch leitendem Material besteht und über den Probenverteilarm (2) mit der Steuereinrichtung (5) elektrisch verbunden ist und dass der Probentisch (1) mit der Steuereinrichtung (5) elektrisch verbunden ist, um ein elektrisches Feld zwischen Spitze (10) und Probentisch (1) zu erzeugen.

6. Automat nach Anspruch 4 oder 5, dadurch gekennzeichnet, dass die Steuereinrichtung (5) einen Computer enthält, um die Eintauchtiefe der Spitze (10) und die zu pipettierende Flüssigkeitsmenge vorzugeben, wobei die Aenderung im elektrischen Feld beim Auftreffen der Spitze (10) auf den Flüssigkeitsspiegel als Auslösesignal für den Eintauchvorgang der Spitze (10) dient.

7. Automat nach Anspruch 4, dadurch gekennzeichnet, dass die Einrichtung ein Lagerbehälter oder Sortierer ist.

8. Automat nach Anspruch 5, dadurch gekennzeichnet, dass die Spitze (10) aus elektrisch leitend gemachtem Kunststoff besteht.

0072558